# EUROPÄISCHE PATENTSCHRIFT

(11) **EP 2 847 507 B1**
(45) Veröffentlichungstag und Bekanntmachung des Hinweises auf die Patenterteilung: **04.04.2018**
(21) Anmeldenummer: 13721897.0
(22) Anmeldetag: 06.05.2013
(51) Int. Cl.: F16L 59/065, F16L 59/12, F16L 41/02, F16L 59/14

(54) **ADAPTER FÜR VAKUUMISOLIERTE LEITUNGEN**
ADAPTER FOR VACUUM-INSULATED LINES
ADAPTATEUR POUR CONDUITES À ISOLATION SOUS VIDE

(30) Priorität: 11.05.2012 US 201261645759 P
(43) Veröffentlichungstag der Anmeldung: 18.03.2015
(73) Patentinhaber: Evatec AG, 9477 Trübbach (CH)
(72) Erfinder: BLESS, Martin, CH-9479 Oberschan (CH)
(74) Vertreter: Troesch Scheidegger Werner AG
(86) Internationale Anmeldenummer: PCT/CH2013/000076
(87) Internationale Veröffentlichungsnummer: WO 2013/166612

(56) Entgegenhaltungen:
- DE-A1- 3 131 336
- DE-U1-202009 006 902
- US-A- 5 660 418

## Beschreibung

Die unten beschriebene Erfindung bezieht sich auf einen Adapter bzw. Anschlussstück zum Anschluss einer vakuumisolierten Leitung an eine Vakuumbearbeitungsanlage.

### TECHNISCHER HINTERGRUND

Vakuumbearbeitungsanlagen sind Systeme, in denen Werkstücke oder Substrate in einem Prozessraum unter Vakuumbedingungen, sprich bei Umgebungsdrücken unterhalb des Atmosphärendrucks behandelt bzw. bearbeitet werden. Solche Systeme sind im Stand der Technik bekannt und werden für thermische Behandlungen, Beschichtungen, Ätzvorgänge und viele andere Prozesse unter reduzierten Druckbedingungen eingesetzt.

Viele Typen von Vakuumbehandlungsanlagen verwenden Schleusen (Load Locks), um ein - im Vergleich zum Prozessraum kleineres - Volumen zum Ein- und Ausbringen der Werkstücke in den Prozessraum einzusetzen. Der Vorteil liegt darin, dass dieses kleinere Volumen schneller abgepumpt (evakuiert) werden kann als der Prozessraum, der dadurch länger unter einem niedrigen Zieldruck gehalten werden kann.

Zudem kann so der Prozessraum einfacher von schädlichen Umgebungsgasen freigehalten werden wie Wasserdampf, flüchtigen organischen Verbindungen, etc. Manche dieser Kontaminationen lassen sich nur schwer mittels Vakuumpumpen entfernen, weshalb häufig die Pumpleistung durch sogenannte Meissner-Fallen unterstützt wird. Eine Meissnerfalle stellt vereinfacht eine gekühlte Kondensationsfläche für Spuren- bzw. Restgase dar, vor allem für Wasserdampf im Vakuum. Sie sind in der Regel als Rohrleitungen in Kupfer oder Edelstahl ausgeführt, die in der Vakuumkammer in Form von Spiralen oder flächig in Mäanderform angeordnet sind, um eine möglichst grosse gekühlte Fläche anzubieten.

Als Kühlflüssigkeiten kommen zumeist handelsübliche FCKW-freie Kühlmittel oder flüssige Gase in Frage (z.B. N₂).

Die Kühlflüssigkeit muss von einer Quelle (z.B. Kühlaggregat, Vorratstank) durch isolierte Leitungen in und wieder aus der Vakuumbehandlungskammer geführt werden. Dazu sind vakuumisolierte Leitungen üblich, bei denen eine flexible Leitung oder Rohr in einer äusseren, vakuumdichten Schutzhülle geführt wird. Der Zwischenraum zwischen der eigentlichen Kühlmittelleitung und dem äusseren Hüllrohr wird evakuiert, so dass der Wärmeverlust zur Umgebung minimiert wird. Solche Vakuumleitungen sind handelsüblich, sie können einsatzfertig (vorevakuiert) bezogen werden. Oft ist der Zwischenraum mit einem Getter-Material versehen, das evtl. Leckagen oder Restgase kompensieren kann. Die Leitungen werden über Vakuumdurchführungen in der Behandlungskammerwand mit der Meissnerfalle verbunden, die sich je nach Einsatzart im Prozessraum oder einer Schleuse befinden kann.

Die DE 20 2009 006902 U1 beschreibt eine Transportleitung und die DE 31 31 336 A1 beschreibt ein Rohrverteilerstück für Vakuum- und Gasleitungen.

### NACHTEILE DES STANDES DER TECHNIK

Die beschriebenen Vakuumleitungen sind empfindlich und nicht zuverlässig langzeit-vakuumdicht. Eine Demontage und Ersatz bzw.

Nachevakuieren ist mit grösserem Wartungsaufwand verbunden, der die Wirtschaftlichkeit von Vakuumbearbeitungsanlagen speziell im industriellen Einsatz negativ beeinflusst.

### ZUSAMMENFASSUNG DER ERFINDUNG

Die vorliegende Erfindung soll die Nachteile des Standes der Technik überwinden. Dazu wird ein Vakuumadapter 4 gemäss Anspruch 1 vorgeschlagen, der zur Durchführung von Kühlleitungen in eine Vakuumbearbeitungsanlage geeignet ist. Diese Leitungen werden an Atmosphäre in vakuumisolierten Zuleitungen 30, 31 geführt. Ein Adapter 4 weist ein Zwischenvolumen 2 auf, das einerseits mit mindestens einem Isolationszwischenraum 32, 33 der vakuumisolierten Zuleitungen 30, 31 verbunden ist und andererseits mit einer Vakuumpumpe. Des Weiteren wird eine Vakuumbearbeitungsanlage gemäss Anspruch 3 vorgeschlagen mit einem Vakuumraum 1 und einem erfindungsgemässen Vakuumadapter 4.

### DETAILLIERTE BESCHREIBUNG

Die Lösung gemäss der vorliegenden Erfindung besteht in einem Vakuumadapter, der den Anschluss einer Kühlmittelleitung an eine Kühlfalle eines Vakuumbehandlungssystems erlaubt, und gleichzeitig einen Zugang zur Vakuumisolation der Zuleitungen zulässt. Über diesen Zugang ist eine Vorvakuumpumpe, die am Behandlungssystem sowieso vorhanden ist, mit der Vakuumisolation operativ verbindbar, so dass Pumpleistung, z.B. mit Hilfe von Ventilen, zum Evakuieren des Isolationszwischenraums der Zuleitungen genutzt werden kann.
Dies kann bevorzugt dann erfolgen, wenn das System selbst diese Pumpleistung vorübergehend nicht braucht. Dies kann bedarfsgesteuert erfolgen oder im Sinne vorbeugender Wartung periodisch oder permanent, bevorzugt gesteuert durch z.B. eine Routine der Steuerung der Vakuumbehandlungsanlage selbst.

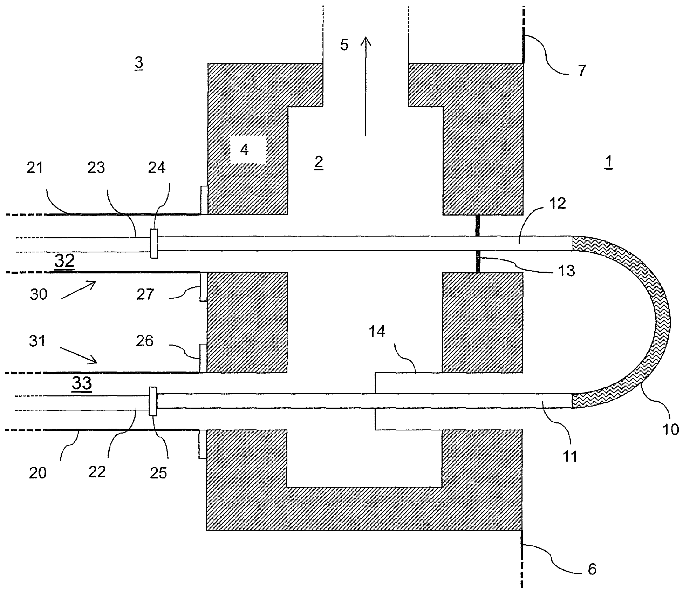

In der Figur ist der Vakuumadapter 4 im Schnitt gezeigt. Er kann an der Wandung einer Behandlungsanlage montiert oder sogar in sie integriert werden. In der Figur ist ein Vakuumraum 1 gezeigt und die Wände der Anlage mit 6, 7 angedeutet. Eine skizzierte Kühlfalle 10 wird von einer Zu- bzw. Ableitung 11, 12 versorgt. Der Vakuumadapter 4 umfasst einen Raum 2, der über einen Pumpstutzen 5 mit einer Vakuumpumpe verbunden ist. Der Raum 2 ist gegenüber dem Vakuumraum 1 mittels Dichtvorrichtungen 13, 14 abgedichtet, die einen Durchlass für die Kühlmittelzuleitung 12, 11 erlauben. Idealerweise sorgen die Dichtvorrichtungen 13, 14 auch für eine thermische Isolation der Leitung 11, 12 gegenüber dem Adapter 4 bzw. den Wandanschlüssen 6, 7. Als Referenz 13 ist eine einfache Scheibe angedeutet, die aus schlecht wärmeleitendem Material bestehen kann. Detail 14 deutet eine Hülse an, die z.B. in die Wand des Adapters 4 eingeschraubt wird und durch die Vorkragung in den Raum 2 den Wärmeleitwiderstand zwischen der Halterung der Leitung 11 und von der Wandung vergrössert.
Der evakuierbare Raum 2 ist zum Isolationszwischenraum 32 bzw. 33 der Vakuumzuleitungen 30, 31 hin offen, erlaubt also diese zu evakuieren, ohne die Verbindungen mechanisch zu trennen oder das Vakuum im Raum 1 zu beeinflussen. Die Vakuumleitungen 30, 31 bestehen aus einer äusseren Hülle 20, 21, die als starres oder bewegliches Rohr, Wellrohr, Hülle oder Schlauch ausgeführt sein kann. Ein Innenleiter 22, 23 stellt die Kühlmittelleitung zum oder vom Adapter 4 dar. 26 und 27 sind Flanschverbindungen des äusseren Hüllrohres 20, 21 zum Adapter 4; die Verbindung kann alternativ auch als Verschraubung, geschweisst oder mittels einer anderen geeigneten Verbindungsart erfolgen. Dasselbe gilt für die angedeuteten Flansche 24, 25 des Innenleiters 22, 23. Der Isolationszwischenraum 32, 33 bzw. dessen Formstabilität kann durch (hier nicht gezeigte) Distanzstücke gewährleistet werden.

Wie die Zeichnung illustriert ist der Isolationszwischenraum 32, 33 via den Innenraum 2 des Adapters 4 permanent mit einer Pumpmöglichkeit verbunden. Damit kann die Funktionsfähigkeit der Vakuumisolation der Zuleitungen 30, 31 gewährleistet werden, bei Bedarf sogar vollautomatisch kontrolliert. Ferner lässt sich ein Drucksensor im Zwischenraum 2 installieren, der ein Nachlassen des Isolationsvakuums anzeigt und so eine Warnmeldung abgibt, bevor die Kälteleistung im Vakuumraum 1 nachlässt. Wenn dadurch ein Bearbeitungsschritt gestoppt oder verzögert werden kann, lassen sich Schäden bzw. Mängel an Werkstücken im Raum 1 vermeiden.

## Patentansprüche

1. Vakuumadapter (4) zum Anschluss an einen Vakuumraum (1) und an Kühlmittelleitungen (11, 12, 22, 23) in vakuumisolierten Zuleitungen (30, 31), wobei der Vakuumadapter (4)
• ein Zwischenvolumen (2) aufweist, das einerseits zu einem Isolationszwischenraum (32, 33) der Zuleitungen (30, 31) hin offen ist und andererseits gegenüber dem Vakuumraum (1) mittels Dichtvorrichtungen (13, 14) abgedichtet ist, die einen Durchlass für die Kühlmittelleitung (11, 12) erlauben, und
• einen Pumpstutzen (5) zu einer Vakuumpumpe aufweist,
**dadurch gekennzeichnet, dass** die Dichtvorrichtungen (13, 14) eine thermische Isolation der Kühlmittelleitung (11, 12) gegenüber dem Adapter (4) bzw. Wandanschlüssen (6, 7) gewährleisten, und dass die Dichtvorrichtungen als Scheibe (13) aus schlecht wärmeleitendem Material ausgeführt sind oder als Hülse (14), die in die Wand des Adapters (4) eingeschraubt wird und eine Vorkragung in das Zwischenvolumen (2) aufweist und den Wärmeleitwiderstand zwischen der Halterung der Kühlmittelleitung (11) und von der Wandung vergrössert.

2. Vakuumadapter (4) gemäss Anspruch 1, **dadurch gekennzeichnet, dass** der Vakuumadapter (4) einen Drucksensor im Zwischenvolumen (2) aufweist, der geeignet ist ein Nachlassen des Isolationsvakuums anzuzeigen.

3. Vakuumbearbeitungsanlage mit einem Vakuumraum (1) und einem Vakuumadapter (4) gemäss Anspruch 1 oder 2, wobei der Vakuumadapter (4) an den Vakuumraum (1), an Kühlmittelleitungen (11, 12, 22, 23) in vakuumisolierten Zuleitungen (30, 31) sowie an eine Vakuumpumpe, insbesondere eine Vorvakuumpumpe, angeschlossen ist.

4. Vakuumbearbeitungsanlage gemäss Anspruch 3, **dadurch gekennzeichnet, dass** die Zuleitungen (30, 31) aus einer äusseren Hülle (20, 21) bestehen, die als starres oder bewegliches Rohr, Wellrohr, Hülle oder Schlauch ausgeführt sind und einen Innenleiter als Kühlmittelleitung (22, 23) aufweisen.

5. Vakuumbearbeitungsanlage gemäss Anspruch 3 oder 4, **dadurch gekennzeichnet, dass** der Vakuumadapter (4) an Wandanschlüssen (6, 7) einer Wandung der Vakuumbearbeitungsanlage montiert ist oder in der Vakuumbearbeitungsanlage, insbesondere in der Wandung, integriert ist.

## Claims

1. Vacuum adapter (4) to be connected to a vacuum room (1) and to coolant lines (11, 12, 22, 23) in vacuum-insulated feed lines (30, 31), wherein the vacuum adapter (4) has
- an intermediate volume (2) that is on the one hand open to an insulation intermediate space (32, 33) of the feed lines (30, 31) and on the other hand is sealed against the vacuum room (1) by means of sealing devices (13, 14) that allow to feed-through the coolant lines (11, 12), and
- a pump neck (5) for connecting a vacuum pump,
**characterized in that** the sealing devices (13, 14) provide a thermal insulation of the coolant lines (11, 12) against the vacuum adapter (4) or wall connectors (6, 7), and **in that** the sealing devices are realized as a disc (13) of poorly heat-conducting material or as a bushing (14) that is screwed in the wall of the vacuum adapter (4) and has a projection into the intermediate volume (2) and increases the heat conductivity resistance between the bracket of the coolant lines (11, 12) and the wall.

2. Vacuum adapter (4) according to claim 1, **characterized in that** the vacuum adapter (4) has a pressure sensor in the intermediate volume (2) that is capable of indicating a drop in the insulation vacuum.

3. Vacuum processing installation with a vacuum room (1) and a vacuum adapter (4) according to claim 1 or 2, wherein the vacuum adapter (4) is connected to the vacuum room (1), to coolant lines (11, 12, 22, 23) in vacuum-insulated feed lines (30, 31) and to a vacuum pump, in particular a backing pump.

4. Vacuum processing installation according to claim 3, **characterized in that** the vacuum-insulated feed lines (30, 31) consist of an outer sleeve (20, 21) in the form of a rigid or flexible conduit, a corrugated tube, an envelope or hose, and have an inner line as coolant line (22, 23).

5. Vacuum processing installation according to claim 3 or 4, **characterized in that** the vacuum adapter (4) is mounted on a wall of the vacuum processing installation by means of wall connectors (6, 7) or is integrated in the wall of the vacuum processing installation.

## Revendications

1. Adaptateur sous vide (4) destiné à être raccordé à un espace sous vide (1) et à des conduites de fluide de refroidissement (11, 12, 22, 23) dans des conduites d'amenée à isolation sous vide (30, 31), l'adaptateur sous vide (4)
- présentant un volume intermédiaire (2) qui est ouvert d'un côté sur un espace intermédiaire d'isolation (32, 33) des conduites d'amenée (30, 31) et de l'autre côté rendu étanche par rapport à l'espace sous vide (1) par le biais de dispositifs d'étanchéité (13, 14) qui permettent un passage pour la conduite de fluide de refroidissement (11, 12), et
- présentant un tuyau de pompage (5) vers une pompe à vide,
**caractérisé en ce que** les dispositifs d'étanchéité (13, 14) garantissent une isolation thermique de la conduite de fluide de refroidissement (11, 12) par rapport à l'adaptateur sous vide (4) ou aux raccordements muraux (6, 7), et **en ce que** les dispositifs d'étanchéité sont réalisés sous la forme d'un disque (13) dans un matériau à mauvaise conductivité thermique ou bien sous la forme d'un manchon (14) qui est vissé dans la paroi de l'adaptateur sous vide (4) et qui présente une saillie dans le volume intermédiaire (2) et augmente la résistance thermoconductrice entre le support de la conduite de fluide de refroidissement (11) et la paroi.

2. Adaptateur sous vide (4) selon la revendication 1, **caractérisé en ce que** l'adaptateur sous vide (4) présente un capteur de pression dans le volume intermédiaire (2), lequel est adapté pour indiquer une baisse du vide d'isolation.

3. Installation d'usinage sous vide comprenant un espace sous vide (1) et un adaptateur sous vide (4) selon la revendication 1 ou 2, l'adaptateur sous vide (4) étant raccordé à l'espace sous vide (1), à des conduites de fluide de refroidissement (11, 12, 22, 23) dans des conduites d'amenée à isolation sous vide (30, 31) ainsi qu'à une pompe à vide, en particulier à une pompe à vide préliminaire.

4. Installation d'usinage sous vide selon la revendication 3, **caractérisée en ce que** les conduites d'amenée (30, 31) sont composées d'une enveloppe externe (20, 21), sont conçues sous la forme d'un tube fixe ou mobile, d'un tuyau ondulé, d'une enveloppe ou d'un tuyau, et présentent un conducteur interne comme conduite de fluide de refroidissement (22, 23).

5. Installation d'usinage sous vide selon la revendication 3 ou 4, **caractérisée en ce que** l'adaptateur sous vide (4) est monté au niveau de raccords muraux (6, 7) d'une paroi de l'installation d'usinage sous vide ou est intégré dans l'installation d'usinage sous vide, en particulier dans la paroi.
